# EUROPEAN PATENT APPLICATION

(11) **EP 3 789 224 A1**
(43) Date of publication of application: **10.03.2021**
(21) Application number: 20194387.5
(22) Date of filing: 03.09.2020
(51) Int. Cl.: B60K 1/02, B60K 17/16, B60K 17/22, B60K 17/346

(54) **ELECTRIC MODULAR TRACTION SYSTEM**

(30) Priority: 03.09.2019 IT 201900015425
(71) Applicant: Iveco S.p.A., 10156 Torino (IT)
(72) Inventor: PEREIRA LEMOS, Jose Francivaldo, Sete Lagoas MG (BR); CALAON, Ivan, 10125 Torino (IT)
(74) Representative: Faraldi, Marco

(57) **Abstract**

An electric traction module (1) for a vehicle comprising at least one electric motor (2), a first and a second output shaft (4, 5) and a transmission (3) configured to connect said at least one electric motor (2) to at least one of said first and second output shafts (4, 5), the electric traction module (1) further comprising a framework (8) configured to define an internal volume (9), which houses, on the inside, the electric motor (2), the transmission (3) and at least part of the first and second output shafts (4, 5).

## Description

### CROSS-REFERENCE TO RELATED APPLICATIONS

This patent application claims priority from Italian patent application no. 102019000015425 filed on 03/09/2019.

### TECHNICAL FIELD

The invention relates to a traction system for vehicles, in particular to a hybrid modular traction system for commercial vehicles.

### KNOWN STATE OF THE ART

Commercial vehicles can be provided with internal combustion engine traction systems, which are usually connected to a drivetrain system connecting an output of the internal combustion engine to one or more driving axles.

This arrangement, which is common in internal combustion engines, becomes obsolete and scarcely suited for more modern electric drive vehicles.

Indeed, compact and versatile hybrid traction assemblies are increasingly needed, so as to free part of the space that was previously occupied by the drivetrain in order to house said electric traction assemblies and the batteries needed to supply them with power.

Furthermore, traction systems are needed, which are highly versatile depending on the torque peaks requested by the vehicle and in which the power provided by the internal combustion engine can be added to the power provided by the electric motors. Furthermore, the batteries can be loaded using the electric motor as generator when it is driven by the internal combustion engine.

Therefore, a traction system is needed, which is as versatile as possible and can be used in different vehicles with different types of axles.

The object of the invention is to fulfil the needs discussed above.

### SUMMARY OF THE INVENTION

The aforesaid object is reached by means of a hybrid modular traction system according to the appended claims.

### BRIEF DESCRIPTION OF THE DRAWINGS

The invention will be best understood upon perusal of the following detailed description of a preferred embodiment, which is provided by way of non-limiting example, with reference to the accompanying drawings, wherein:
- Figure 1 shows a schematic and partially sectional view, with parts removed for greater clarity, of a hybrid traction module according to a first embodiment of the invention;
- Figure 2A shows a schematic and partially sectional view, with parts removed for greater clarity, of a hybrid traction module according to a second embodiment of the invention in a first operating condition; and
- Figure 2B shows a schematic and partially sectional view, with parts removed for greater clarity, of the traction system of figure 2A in a second operating condition.

### DETAILED DESCRIPTION OF THE INVENTION

According to the invention, an electric traction module 1 is provided, which basically comprises at least one electric motor 2 and a mechanical transmission system 3, which is configured to transmit the mechanical torque produced by the electric motor 2 to a pair of axle shafts 4, 5 of a vehicle (not shown), which are each configured to carry, at an end of theirs, a wheel, as it is known.

The electric motors 2 and the mechanical transmission system 3 are both advantageously housed inside a framework 8, which is configured to delimit and internal volume 9 suited for the purpose. The framework 8 is also configured to delimit two openings, which are designed to allow the axle shafts 4,5 to go through it.

The electric motor 2 are further connected, in an electromagnetic manner, for example through wire connection or through electromagnetic signals, to a control unit of the vehicle, for example the ECU, which is configured to control the operation thereof or, in case there are different electric motors 2, the operation thereof in a coordinated manner.

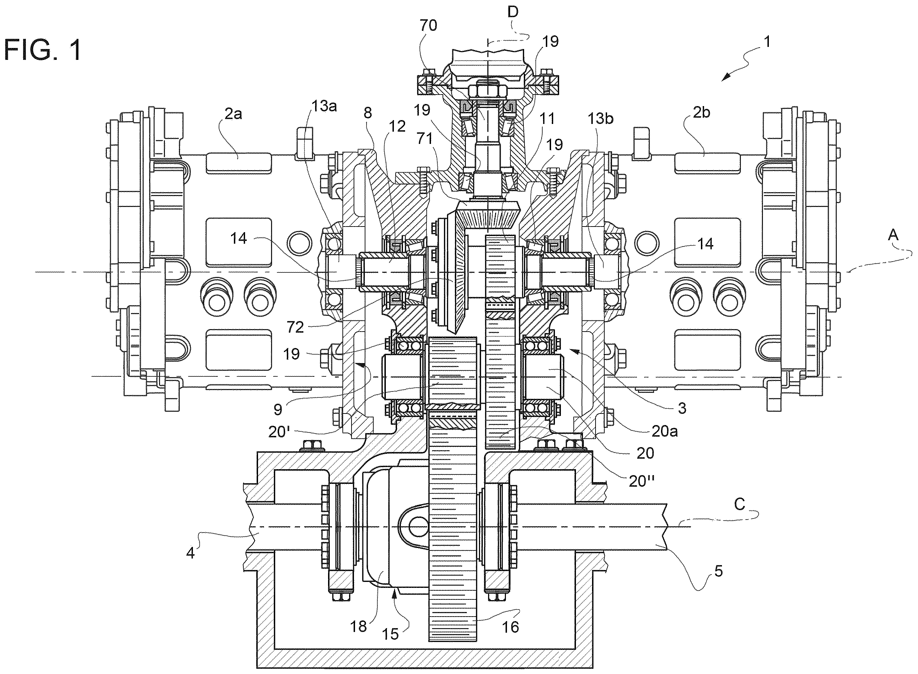

In the first embodiment of the invention, which is shown in figure 1, the module 1 comprises a first electric motor 2a and a second electric motor 2b, which are housed inside the volume 9 defined by the framework 8 together with the mechanical transmission 3, which is configured to connect the motors 2a, 2b to the axle shafts 4, 5.

In particular, each motor 2a, 2b is provided with an output shaft 13a, 13b, which can be connected, for example through a spline connection 14, to a common intermediate shaft 12a, 12b. Therefore, the intermediate shaft 12a and the output shafts 13a, 13b are coaxial to one another along an axis A.

The transmission 3 further comprises a differential 15, which is mechanically connected to a cogged wheel 11, which is carried by the intermediate shaft 12 in an integral manner, as described more in detail below.

The differential 15 is known and allows for a connection to the remaining part of the mechanical transmission 3, so that the torque, from the cogged wheel 11, is divided between the axle shafts 4, 5, which are coaxial to an axis C, which is parallel to the aforesaid axis A. The differential 15 advantageously comprises, integral to a gear train-holder 18 of its, a cogged wheel 16, which extends from an outer surface of the gear train-holder 18 in a direction that is perpendicular to the aforesaid axis A.

In this case, the cogged wheel 16 is connected to the cogged wheel 11 by means of an intermediate gear 20, preferably a transmission gear, which is supported by an intermediate support shaft 20a, which is carried by the framework 8 so that it can freely rotate, for example by means of rolling bearings 19. In particular, the intermediate support shaft 20a carries, in an integral manner, a first cogged wheel 20' meshing with the cogged wheel 16 and a second cogged wheel 20'' having a different size/number of teeth compared to the first one and meshing with the cogged wheel 11.

In the embodiment described herein, the framework 8 is further configured to allow for the passage, inside the space 9, of a shaft 70, which is supported so as to freely rotate relative to the framework by means of rolling bearings 19. The shaft 70 preferably is coaxial to an axis D, which is perpendicular to the axes A and C.

The shaft 70 is connected, by means of a mechanical transmission (not shown), to an output of an internal combustion engine and, therefore, is driven by the latter. The shaft 70 carries, at an end of its located inside the volume 9, a cogged wheel 71, which is integral to it. The cogged wheel 71 is configured to mesh with a cogged wheel 72, which is carried by the intermediate shaft 12 in an integral manner. As a consequence of the geometry described above, in the example discussed herein the cogged wheels 71 and 72 are bevel wheels.

The first embodiment described above works as follows.

In a first operating condition, the internal combustion engine delivers a torque/velocity to the shaft 70, which, through the meshing between the wheels 71 and 72, delivers a torque/velocity to the mechanical transmission 3 and, hence, to the differential 15, which divides it, in a known manner, between the axle shafts 4, 5. In this configuration, since the electric motors 2a, 2b are connected to shaft 12, which is driven by the cogged wheel 72, they can work as generator.

In a second operating condition, the internal combustion engine delivers a torque, like in the previous case, but the electric engine/s 2a, 2b are controlled by the electronic control unit so as to deliver a torque/velocity to the shaft 12. In this way, the torques provided by the shaft 70, namely by the internal combustion engine, and by the motors 2a, 2b are added to one another on the cogged wheel 11 and then, through the transmission 3, are transmitted to the differential 15 and, hence, to the axle shafts 4, 5.

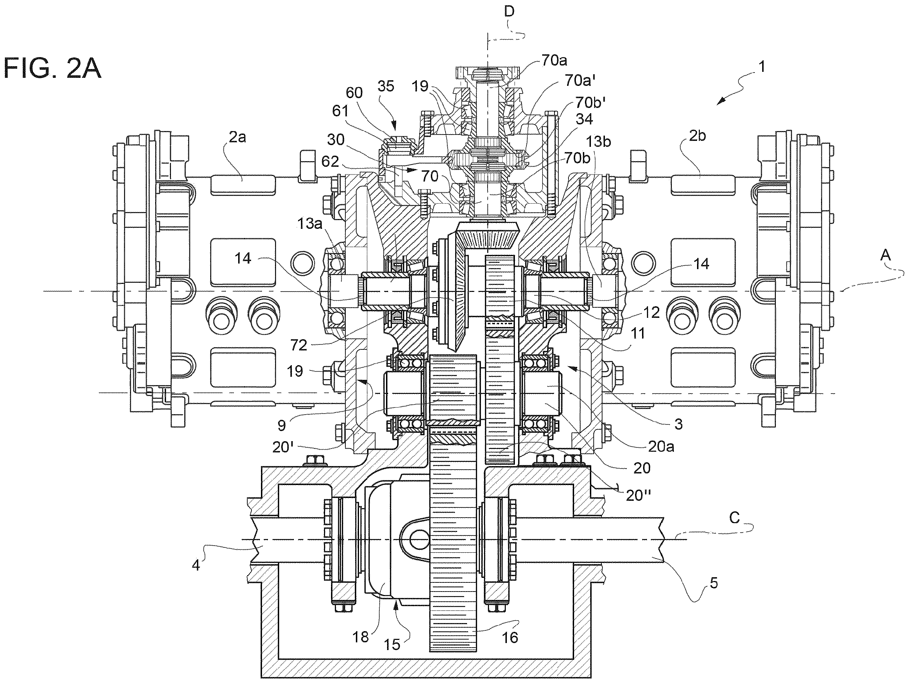

In the second embodiment of the invention, which is shown in figures 2A-2B, the arrangement of the traction module 1 substantially is the same as the one of the first embodiment and will not be described for the sake of brevity.

The difference between the two embodiments lies in the fact that the shaft 70 comprises a first portion 70a, which is carried by the mechanical transmission driven by the internal combustion engine, and a second portion 70b, which is carried by the framework 8 so that it can freely rotate and is uncoupled from the first portion 70a, for example by means of rolling bearings 19. The second portion 70b carries, in an integral manner, the cogged wheel 71, which is connected to the mechanical transmission 3 by means of the cogged wheel 72.

The module 1 further comprises selector means 30, which are configured to selectively couple the portion 70a driven by the internal combustion engine of the vehicle to the portion 70b connected to the transmission 3.

In particular, the selector means 30 can comprise a selector gear 34, which is configured to slide along the axis D on respective end portions 70b', 70a' of the shafts 12b, 12a, which face one another and are provided with a suitable spline.

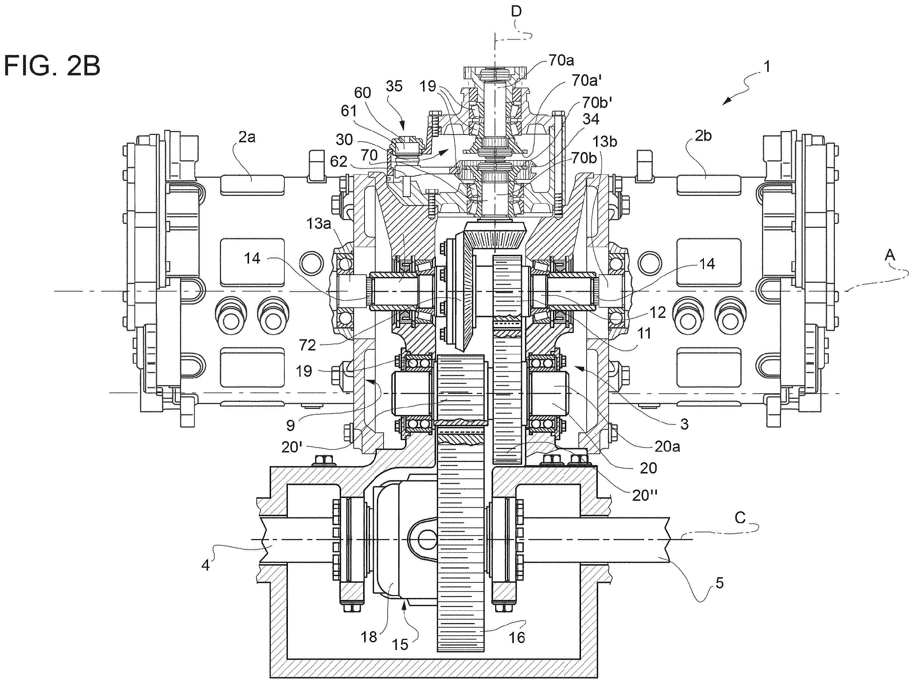

Consequently, the selector gear 34 can assume a first position (shown in figure 2A), in which it is placed so as to mesh with the sole end portion 70b, and a second position (the one actually shown in figure 2B), in which it is placed so as to mesh with both end portions 70a, 70b. In the first position, the internal combustion engine is isolated from the traction module 1; on the contrary, in the second position, the internal combustion engine can interact with the motors 2a, 2b through the mechanical transmission 3.

The selector means 30, namely the selector gear 34, are moved between the two aforesaid positions by means of actuator means 35, which are carried by the framework 8 and are configured to move the gear 34 between the first and the second position based on a manual command or an electronic signal automatically transmitted by the electronic control unit, which is also configured to control the electric motors 2a, 2b.

In the case described herein, the actuator means 35 are pneumatic actuators basically comprising a cylinder 60, which is configured to receive a fluid under pressure (the circuit not being shown for the sake of simplicity) and to house a piston 61, which can slide inside the cylinder 60 due to the action of said fluid under pressure. The cylinder 60 carries a rod 62, which is connected to the gear 34. Hence, the movement of the piston 61 due to the action of the fluid in the cylinder 60 leads to a consequent movement of the selector gear 34.

The second embodiment described above works as follows.

In the operating condition of figure 2A, the selector 34 is placed so as to mesh with both end portions 70a', 70b' of the portions 70a, 70b of the shaft 70b. Consequently, the mechanical transmission 3 is connected to the internal combustion engine and the modes of operation are identical to the ones described above for the first embodiment.

In the operating condition of figure 2B, the actuator means 35 control the selector 34, in this case allowing air to get into the cylinder 60, so that the portion 70b is no longer connected to the portion 70a. In this case, the latter rotates in an idle manner driven by the torque delivered by the electric motors 2a, 2b to the intermediate shaft 12 through the wheel 72. This operating condition can be useful in case of mere electric use of the vehicle, eliminating the inertia due to the internal combustion engine when the latter is not used.

The invention described herein also relates to an axle (not shown) comprising the axle shafts 4, 5 and a traction module 1 carried by the aforesaid axle as described above. In particular, the axle shafts can be provided, at an end of theirs, with a wheel hub, which is configured to fit a rim/wheel of the vehicle. Said wheel hub can be configured to define further velocity/torque transmission ratios between axle shaft 4, 5 and rim, in addition to the ones already provided by the traction module 1.

Owing to the above, the advantages of the traction module 1 according to the invention are evident.

The traction module 1 comprises, in a limited and defined space, which is delimited by the framework 8, a complete hybrid traction system for a driving axle of a vehicle.

The entire mechanical transmission 3 can be housed in a closed and advantageously lubricated space, thus reducing the wear thereof and the possible contamination from the outside.

Furthermore, through the selector means 30, as described above, users can select whether to use the module in a hybrid mode, in which a shaft driven by the internal combustion engine is always connected to the transmission 3, or in a pure electric mode, thus disengaging it from the chain of the transmission 3. This allows for a a hybrid or electric traction module that is extremely versatile and responds to the different loads of the vehicle.

Finally, the traction module 1 according to the invention can be subjected to changes and variants, which, though, do not go beyond the scope of protection set forth in the appended claims.

The number and type of electric motors 2, which can further serve as generators, and the type of mechanical transmission 3 can be different depending on the power to be delivered by the electric traction module 1.

Moreover, the gears shown herein, for the sake of simplicity, are all represented as gears with straight teeth; however, it is clear that multiple gears and arrangements of mechanical transmission 3 are possible, provided that they are equivalent to the ones described above.

The actuator means 35 can obviously be of any type, namely electric, hydraulic, pneumatic or mechanical actuators.

Finally, the embodiments described above can be combined with one another, according to the limits of the appended claims.

## Claims

1. An electric traction module (1) for a vehicle comprising at least an electric motor (2), a first and a second output shaft (4, 5) and a transmission (3) configured to connect said at least one electric motor (2) to at least one of said first and second output shafts (4, 5), said electric traction module (1) furthermore comprising a framework (8) configured to define an internal volume (9) inside of which said electric motor (2), said transmission (3) and at least part of said first and second output shafts (4, 5) are housed.

2. The traction module according to claim 1, wherein said module (1) comprises a single electric motor (2a) configured to impart a torque to said output shafts (4, 5) through said transmission (3).

3. The traction module according to claim 1, wherein said module (1) comprises a first and a second electric motor (2a, 2b) configured to impart a torque to said output shafts (4, 5) through said transmission (3).

4. The traction module according to one of the claims from 1 to 3, wherein said mechanical transmission (3) comprises a differential (15) interposed between said output shafts (4, 5) and said at least one electric motor (2a, 2b).

5. The traction module according to claim 4, wherein said at least one electric motor (2a, 2b) is connected to a gear train-holder (18) of said differential (15) by means of a gear with cogged wheels, at least a first cogged wheel (11a, 11b) being carried by said at least one electric motor (2a, 2b) and the other cogged wheel (16a, 16b) being carried by said gear train-holder (18).

6. The traction module according to claim 5, wherein said module comprises two motors (2a, 2b) both incident to a common shaft (12) carrying said at least one cogged wheel (11a, 11b).

7. The traction module according to one of the claims from 1 to 6, wherein said framework (8) defines an opening configured to allow the passage of a shaft (70) configured to be driven by an internal combustion engine of said vehicle, said shaft (70) being connected to said mechanical transmission (3).

8. The traction module according to one of the claims from 1 to 6, wherein said framework (8) defines an opening configured to allow the passage of a shaft (70) configured to be driven by an internal combustion engine of said vehicle, said shaft (70) being selectively connectable to said mechanical transmission (3).

9. The traction module according to claim 8, further comprising selector means (30) configured to selectively connect said shaft (70) to said mechanical transmission (3) .

10. The traction module according to claim 9, wherein said selector means (30) comprise a selector (34), said shaft (70) comprising a first portion (70a) driven by said internal combustion engine and a second portion (70b) connected to said mechanical transmission (3), said selector (34) being carried slidingly relative to said common shaft (12) and integrally with its rotation, between a first position in which it meshes only with said second portion (70b) and a second position in which it meshes said first and second portions (70a, 70b).

11. The traction module according to claim 9 or 10, comprising actuator means (35), configured to control said selector (34) for selectively connecting said shaft (70) to said mechanical transmission (3).

12. The traction module according to claim 10, wherein said actuator means (35) comprise pneumatic actuation means.

13. A vehicle axle comprising a first and a second axle shaft (4, 5) and an electric traction module (1) according to any one of the preceding claims.

14. The axle according to claim 13, wherein said first and second axle shafts (4, 5) are provided with wheel-hubs configured to support a wheel of said vehicle, said wheel-hubs comprising means for varying the torque/velocity between said axle shaft and said wheel.
